# EUROPEAN PATENT APPLICATION

(11) **EP 2 977 885 A1**
(43) Date of publication of application: **27.01.2016**
(21) Application number: 15175767.1
(22) Date of filing: 07.07.2015
(51) Int. Cl.: G06F 3/0488

(54) **INFORMATION INPUT DEVICE, CONTROL METHOD, AND CONTROL PROGRAM**

(30) Priority: 22.07.2014 JP 2014149190
(71) Applicant: Brother Kogyo Kabushiki Kaisha, Nagoya-shi, Aichi 467-8561 (JP)
(72) Inventor: SUGIMURA, Yoshihiko, Nagoya-shi, Aichi 467-8562 (JP)
(74) Representative: Prüfer & Partner mbB European Patent Attorneys

(57) **Abstract**

A CPU (21) of a reading device (2) acquires coordinate data indicating a position of an electronic pen (3). The CPU determines whether at least one of first and second conditions is satisfied. The first condition is that, of a single line drawing (152), a line corresponding to positions detected inside a first area (141) is equal to or longer than a specified length. The second condition is that, of the single line drawing, one or more positions inside the first area are consecutively detected for equal to or longer than a specified time period. Further, the CPU determines whether a start position (151) of the line drawing is inside a start point determination area (140). In a case where the start position is inside the start point determination area and at least one of the first and second conditions is satisfied, the CPU sets an action ID.

## Description

### BACKGROUND

The present invention relates to an information input device, a control method, and a control program for receiving input of an instruction, based on an operation of writing a line drawing using a writing means.

An information input device is known that can digitize a trajectory of a movement of a writing tool, based on an operation of the writing tool that is used to write on a paper medium placed on a placement portion. In an electronic writing device disclosed in Japanese Laid-Open Patent Publication No. 2013-25659, when writing is performed on a paper medium placed on a placement portion using an electronic pen, stroke data is generated in accordance with coordinate information indicating a plurality of positions of the pen tip. For example, after a user uses the electronic pen and writes in a writing area on the paper medium, the user may write a check mark in a check box on the paper medium. A ROM of the electronic writing device stores, in advance, format information that indicates a format of the paper medium. The electronic writing device refers to the format information and recognizes that the check box has been ticked, and executes processing in accordance with the ticked check box.

### SUMMARY

In a known information input device, when the whole of the written check mark is contained inside the check box, it is determined that the check box has been ticked. In this information input device, when the check mark emerges even slightly outside the check box, it may not be determined that the check box has been ticked. Further, in another known information input device, when at least a part of the written check mark is inside the check box, it is determined that the check box has been ticked. In this information input device, it may be determined that the check box has been ticked even when normal writing, which is not writing of the check mark, is performed in the vicinity of the check box. Thus, such information input devices may perform a mistaken determination is made with respect to whether or not an instruction has been input via the check box.

It is an object of the present invention to provide an information input device, a control method, and a control program that are capable of more accurately determining whether an instruction is input, based on an operation of writing a line drawing using a writing means.

An information input device according to a first aspect of the invention includes a detection means for detecting one or more detection positions, the one or more detection positions being one or more positions of a writing means that is one of in contact with and close to a detection area, an acquisition means for acquiring, based on the one or more detection positions detected by the detection means, line data that corresponds to a single line drawing written using the writing means and that includes at least one detection position of the one or more detection positions, a first determination means for determining whether a start position is in a first area, the start position being a position first detected by the detection means among the at least one detection position included in the line data acquired by the acquisition means, and the first area being part of the detection area, a second determination means for determining whether at least one of a first condition and a second condition is satisfied, the first condition being that, of the at least one detection position included in the line data acquired by the acquisition means, a line indicated by one or more detection positions in a second area is equal to or longer than a specified length, the second condition being that the one or more detection positions in the second area are consecutively detected for equal to or longer than a specified time period, and the second area being an area that is part of the detection area, and a third determination means for determining that an instruction corresponding to the second area is input, in response to determining by the first determination means that the start position is in the first area and determining by the second determination means that at least one of the first condition and the second condition is satisfied.

In the first aspect, the information input device can accurately determine whether the instruction is input, by determining whether the start position is in the first area and determining whether at least one of the first condition and the second condition is satisfied with respect to the second area. By starting to write inside the first area using the writing means and by writing a line of the specified length in the second area or continuing to write for the specified time period, a user can accurately input an instruction into the information input device.

In the information input device according to the first aspect, the first area may include the second area and a third area. The third area may be an area that is provided outside the second area and that is in contact with the second area. In this case, the information input device can determine whether the start position is in the first area, which is larger than the second area. With respect to the first condition and the second condition, the information input device can target a position inside the second area, which is smaller than the first area. Thus, even when the user starts writing, using the writing means, in the third area, which is provided outside the second area, as long as at least one of the first condition and the second condition is satisfied, the user can input the instruction into the information input device.

In the information input device according to the first aspect, the third area may be an area that surrounds a periphery of the second area. A first distance may be more than once a second distance and equal to or less than twice the second distance. The first distance may be a distance from a center of the second area to an outer edge of the third area. The second distance may be a distance from the center of the second area to an outer edge of the second area. In this case, in a case where the start position is detected at a position, in the detection area, that is outside of the third area and that is separated by a specific distance from the center of the second area, the information input device does not determine that the instruction is input. Thus, in a case where the user starts the writing from a position that is separated by the specific distance from the center of the second area, it is possible to inhibit the information input device from mistakenly determining that the instruction is input.

In the information input device according to the first aspect, the detection means may include the detection area. The detection area may be configured such that a paper medium can be placed thereon. The detection means may be configured such that a check box provided on the paper medium placed on the detection area has a positional correspondence to the second area. The line data may indicate the single line drawing, which is one of a point and a line, written on the paper medium using the writing means. In this case, the user can input the instruction by writing in the check box provided on the paper medium, using the writing means.

In the information input device according to the first aspect, a size of the second area may be substantially the same as a size of the check box. In this case, the user can input the instruction into the information input device by writing the line that is equal to or longer than the specified length in the check box provided on the paper medium or by continuing to write in the check box for the specified time period.

A method according to a second aspect of the invention is a method of controlling an information input device. The information input device includes a detection means for detecting one or more detection positions. The one or more detection positions are one or more positions of a writing means that is one of in contact with and close to a detection area. The method includes the steps of acquiring, based on the one or more detection positions detected by the detection means, line data that corresponds to a single line drawing written using the writing means and that includes at least one detection position of the one or more detection positions, determining whether a start position is in a first area, the start position being a position first detected by the detection means among the at least one detection position included in the acquired line data, and the first area being part of the detection area, determining whether at least one of a first condition and a second condition is satisfied, the first condition being that, of the at least one detection position included in the acquired line data, a line indicated by one or more detection positions in a second area is equal to or longer than a specified length, the second condition being that the one or more detection positions in the second area are consecutively detected for equal to or longer than a specified time period, and the second area being an area that is part of the detection area, and determining that an instruction corresponding to the second area is input, in response to determining that the start position is in the first area and determining that at least one of the first condition and the second condition is satisfied.

In the second aspect, it is possible to accurately determine whether the instruction is input in the information input device, by determining whether the start position is in the first area and determining whether at least one of the first condition and the second condition is satisfied with respect to the second area. By starting to write inside the first area using the writing means and by writing a line of the specified length in the second area or continuing to write for the specified time period, a user can accurately input an instruction into the information input device.

In the method according to the second aspect, the first area may include the second area and a third area. The third area may be an area that is provided outside the second area and that is in contact with the second area. In this case, the information input device can determine whether the start position is in the first area, which is larger than the second area. With respect to the first condition and the second condition, the information input device can target a position inside the second area, which is smaller than the first area. Thus, even when the user starts writing, using the writing means, in the third area, which is provided outside the second area, as long as at least one of the first condition and the second condition is satisfied, the user can input the instruction into the information input device.

In the method according to the second aspect, the third area may be an area that surrounds a periphery of the second area. A first distance may be more than once a second distance and equal to or less than twice the second distance. The first distance may be a distance from a center of the second area to an outer edge of the third area. The second distance may be a distance from the center of the second area to an outer edge of the second area. In this case, in a case where the start position is detected at a position, in the detection area, that is outside of the third area and that is separated by a specific distance from the center of the second area, the information input device does not determine that the instruction is input. Thus, in a case where the user starts the writing from a position that is separated by the specific distance from the center of the second area, it is possible to inhibit the information input device from mistakenly determining that the instruction is input.

A control program according to a third aspect of the present invention is a control program including instructions that, when executed by a processor of an information input device, cause the information input device to perform the method according to the second aspect. The information input device includes a detection means for detecting one or more detection positions. The one or more detection positions are one or more positions of a writing means that is one of in contact with and close to a detection area. In the third aspect, it is possible to accurately determine whether the instruction is input in the information input device, by determining whether the start position is in the first area and determining whether at least one of the first condition and the second condition is satisfied with respect to the second area. By starting to write inside the first area using the writing means and writing a line of the specified length in the second area or continuing to write for the specified time period, a user can accurately input an instruction into the information input device.

### BRIEF DESCRIPTION OF THE DRAWINGS

Embodiments will be described below in detail with reference to the accompanying drawings in which:
FIG. 1 is a diagram showing an overview of a handwriting input system 1;
FIG. 2 is a block diagram showing an electrical configuration of the handwriting input system 1;
FIG. 3 is a diagram showing a paper sheet 121;
FIG. 4 is a diagram showing relationships between a line drawing 152 that indicates a check mark, and a first area 141 and a second area 142 of a detection area;
FIG. 5 is a diagram showing relationships between the line drawing 152 that indicates the check mark, and the first area 141 and the second area 142 of the detection area;
FIG. 6 is a diagram showing relationships between the line drawing 152 that indicates the check mark, and the first area 141 and the second area 142 of the detection area;
FIG. 7 is a diagram showing relationships between the line drawing 152 that indicates the check mark, and the first area 141 and the second area 142 of the detection area;
FIG. 8 is a flowchart of main processing; and
FIG. 9 is a flowchart of check determination processing executed in the main processing.

### DETAILED DESCRIPTION

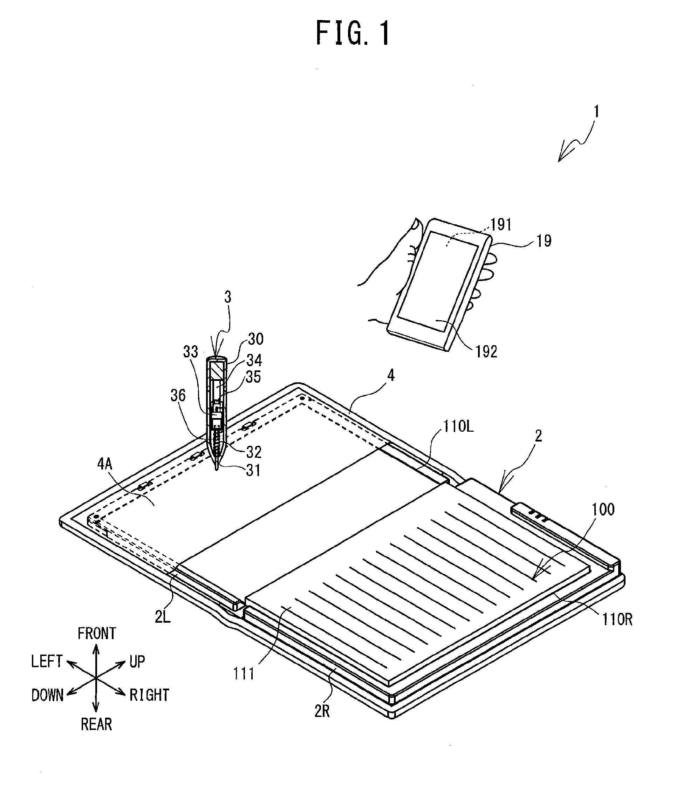

Hereinafter, an embodiment will be explained with reference to the drawings. An overview of a handwriting input system 1 according to the present embodiment will be explained with reference to FIG. 1. In the explanation that follows, the upper left side, the lower right side, the top side, the bottom side, the upper right side, and the lower left side in FIG. 1 are respectively the left side, the right side, the front side, the rear side, the top side, and the bottom side of a reading device 2.

As shown in FIG. 1, the handwriting input system 1 mainly includes the reading device 2, an electronic pen 3, a smart phone 19, and the like. The reading device 2 is a thin, lightweight handwriting input device that can be folded up and carried. A paper medium 100 may be placed on the reading device 2. In the handwriting input system 1, a user may use the electronic pen 3 to write a line drawing on a paper sheet 111 of the paper medium 100. A single line drawing indicates one of a single point and a single line. At least one line drawing may indicate a character, a numeral, a symbol, a graphic, or the like. The reading device 2 may acquire a position of the electronic pen 3 during writing. Based on the acquired position, the reading device 2 may identify the line drawing written on the paper sheet 111 using the electronic pen 3. The reading device 2 may generate an image file that includes the identified line drawing. The reading device 2 may transmit the generated image file to the smart phone 19. When the smart phone 19 receives the image file, the smart phone 19 may cause an image corresponding to the received image file to be displayed on a display 192. Therefore, the user may visually check, via the display 192, the line drawing having the same shape as that of the line drawing written on the paper sheet 111 using the electronic pen 3.

The reading device 2 mainly includes a left reading device 2L and a right reading device 2R, which form a left-right pair, and a cover 4. The left reading device 2L and the right reading device 2R are each shaped as a thin rectangular plate. The left reading device 2L and the right reading device 2R are disposed such that they may be opened out to a two-page spread in the left-right direction on the front face of the cover 4. The left reading device 2L and the right reading device 2R are electrically connected by a flat cable (not shown in the drawings). The cover 4 includes a pouch-shaped pouch portion 4A on its left side. The left reading device 2L may be removably mounted in the cover 4 by being inserted into the pouch portion 4A. The right reading device 2R may be affixed to the right front face of the cover 4 by double-sided tape, an adhesive resin film, or the like.

The paper medium 100 may be removably mounted on the front face of the reading device 2. The paper medium 100 has a booklet shape that may be opened out to a two-page spread in the left-right direction. In the paper medium 100, a pair of covers (a front cover 110L and a back cover 110R) and a plurality of forms 111 are bound by a part of their edges. For example, the paper medium 100 may be an A5 size notebook. The paper medium 100 may be mounted on the reading device 2 such that the front cover 110L is placed on the front face of the left reading device 2L and the back cover 110R is placed on the front face of the right reading device 2R. For example, the paper medium 100 may be mounted in a state in which the paper medium 100 is positioned on the reading device 2 by double-sided tape, an adhesive resin film, or the like. In other words, the left reading device 2L and the right reading device 2R may move as a single unit with the front cover 110L and the back cover 110R, respectively. The user may use the electronic pen 3 to write a line drawing on the form 111 of the paper medium 100. The reading device 2 may include the right reading device 2R only. In this case, the paper medium 100 that can be mounted on the reading device 2 is A5 size writing paper, for example.

The electronic pen 3 is a known electromagnetic induction-type electronic pen and mainly includes a cylindrical body 30, a core 31, a coil 32, a variable capacity capacitor 33, a circuit board 34, a capacitor 35, and an ink storage portion 36. The cylindrical body 30 has a circular cylindrical shape. The cylindrical body 30 contains in its interior a portion of the core 31, the coil 32, the variable capacity capacitor 33, the circuit board 34, the capacitor 35, and the ink storage portion 36. The core 31 is provided in the tip portion of the electronic pen 3. The core 31 is urged toward the tip of the electronic pen 3 by an elastic member that is not shown in the drawings. The tip portion of the core 31 protrudes to the outside of the cylindrical body 30. The back end of the core 31 is connected to the ink storage portion 36, which stores ink. The ink storage portion 36 supplies the ink to the core 31. When the user uses the electronic pen 3 to write on the form 111, a line drawing may be formed by the ink on the form 111.

The coil 32 is held between the core 31 and the variable capacity capacitor 33 in a state in which the coil 32 is wound around the ink storage portion 36. The variable capacity capacitor 33 is fixed in place in the interior of the electronic pen 3 by the circuit board 34. The capacitor 35 is mounted on the circuit board 34. The capacitor 35 and the variable capacity capacitor 33 are connected in parallel with the coil 32 to configure a known resonance (synchronization) circuit.

The smart phone 19 includes the touch panel 191 and the display 192. The touch panel 191 is used for inputting various types of commands. The display 192 may display the image that corresponds to the image file. A general-purpose personal computer (PC) or a tablet PC may be used instead of the smart phone 19.

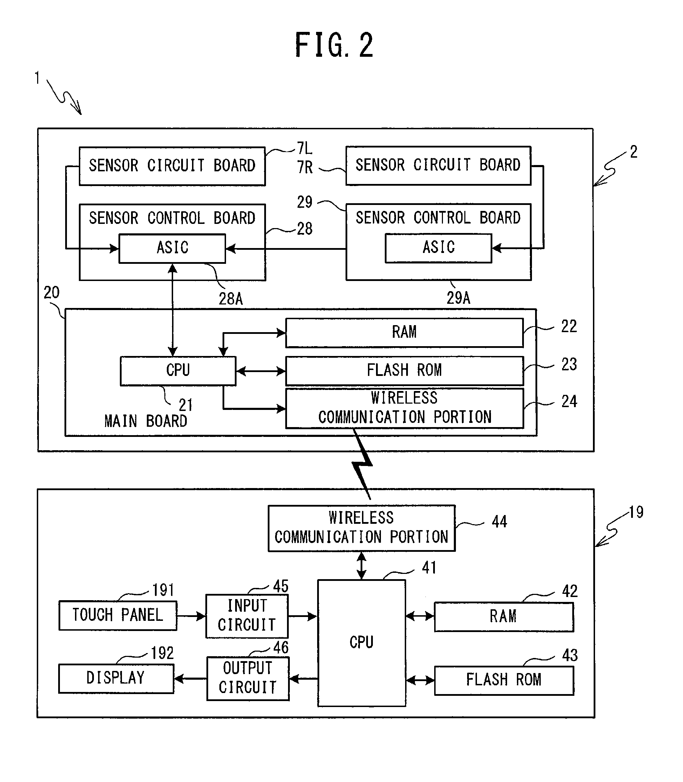

An electrical configuration of the handwriting input system 1 will be explained with reference to FIG. 2. First, an electrical configuration of the reading device 2 will be explained. The reading device 2 includes sensor boards 7L and 7R, a main board 20, and sensor control boards 28 and 29. The sensor boards 7L and 7R are respectively provided inside the left reading device 2L and the right reading device 2R. The main board 20 is provided with a CPU 21, a RAM 22, a flash ROM 23, and a wireless communication portion 24. The RAM 22, the flash ROM 23, and the wireless communication portion 24 are electrically connected to the CPU 21. The CPU 21 performs control of the reading device 2. The RAM 22 temporarily stores various data, such as calculation data. The flash ROM 23 stores programs to be executed by the CPU 21 to control the reading device 2. The flash ROM 23 stores layout data. The layout data is information corresponding to a format that indicates a layout of a design printed in advance on the paper sheet 111, and the like. The layout data is data that indicates a position of each of writing areas and check boxes on the paper sheet 111. The flash ROM 23 stores line data that indicates a trajectory of the electronic pen 3. The wireless communication portion 24 is a controller for performing near field wireless communication with an external electronic device.

In each one of the sensor circuit boards 7L and 7R, a plurality of long, thin loop coils are arrayed along both an up-down axis and a left-right axis. The sensor circuit board 7L is electrically connected to an ASIC 28A of the sensor control board 28. In a case where a writing operation is performed above the sensor circuit board 7L by using the electronic pen 3, the ASIC 28A may detect coordinate data that indicates the position of the electronic pen 3. The sensor circuit board 7R is electrically connected to an ASIC 29A of the sensor control board 29. In a case where a writing operation is performed above the sensor circuit board 7R by using the electronic pen 3, the ASIC 29A may detect the coordinate data that indicates the position of the electronic pen 3. The ASIC 28A is the master and is connected directly to the CPU 21, while the ASIC 29A is the slave and is connected to the CPU 21 via the ASIC 28A.

Each of the sensor boards 7L and 7R includes a detection area. The detection area is an area, of each of the sensor boards 7L and 7R, that corresponds to a portion in which loop coils are arranged. The detection area of the sensor board 7L and the detection area of the sensor board 7R have the same configuration. Thus, in the following explanation, the detection area of the sensor board 7L will be explained and an explanation of the detection area of the sensor board 7R will be omitted.

The principle by which the line data is acquired will be explained in general terms. The CPU 21 controls the ASICs 28A and 29A to cause an electric current of a specific frequency (a transmission current for excitation) to flow through each of the loop coils in the corresponding one of the sensor circuit boards 7L and 7R. This causes a magnetic field to be generated by each one of the loop coils in the sensor circuit boards 7L and 7R. In this state, when the user uses the electronic pen 3 to perform an operation of writing a line drawing on the form 111 of the paper medium 100 that is mounted on the reading device 2, for example, the electronic pen 3 may come close to one of the sensor circuit boards 7L and 7R. The resonance circuit of the electronic pen 3 may therefore resonate due to electromagnetic induction and may generate an induced magnetic field.

Next, the CPU 21 controls the ASICs 28A and 29A to stop the generating of the magnetic fields by the individual loop coils in the sensor circuit boards 7L and 7R. Each one of the loop coils in the sensor circuit boards 7L and 7R may receive the induced magnetic field that is generated by the resonance circuit of the electronic pen 3. The CPU 21 controls the ASICs 28A and 29A to detect signal currents (reception currents) that flow through the individual loop coils in the sensor circuit boards 7L and 7R. By performing this operation for each of the loop coils, the ASICs 28A and 29A may detect, as the coordinate data, the position of the electronic pen 3, based on the reception currents.

When a line drawing is written on the form 111 using the electronic pen 3, a writing pressure is imparted to the core 31. The inductance in the coil 32 varies according to the writing pressure that is imparted to the core 31. This causes the resonance frequency of the resonance circuit of the electronic pen 3 to vary depending on the writing pressure that is imparted to the core 31. The CPU 21 detects the changes (phase changes) in the resonance frequency to specify the writing pressure that is imparted to the electronic pen 3. In other words, the CPU 21 may determine, according to the specified writing pressure, whether a line drawing is being written by using the electronic pen 3 on the form 111.

Next, an electrical configuration of the smart phone 19 will be explained. The smart phone 19 mainly includes a CPU 41, a RAM 42, a flash ROM 43, a wireless communication portion 44, an input circuit 45, an output circuit 46, the touch panel 191, and the display 192. The CPU 41 performs control of the smart phone 19. The CPU 41 is electrically connected to the RAM 42, the flash ROM 43, the wireless communication portion 44, the input circuit 45, and the output circuit 46.

The RAM 42 stores various types of data temporarily. The wireless communication portion 44 is a controller for performing near field wireless communication with an external electronic device. The input circuit 45 performs control for sending a command to the CPU 41 from the touch panel 191. The output circuit 46 performs control for displaying an image on the display 192 in response to a command from the CPU 41.

The flash ROM 43 stores programs to be executed by the CPU 41 and an image file received from the reading device 2. The smart phone 19 includes a media reading device (for example, a memory card slot) that is not shown in the drawings. The smart phone 19 may read a program that is stored in a storage medium (for example, a memory card) with the media reading device and may install the program in the flash ROM 43. The smart phone 19 may receive a program from an external device (not shown in the drawings) that is connected to the smart phone 19, or from a network, and then may install the program in the flash ROM 43.

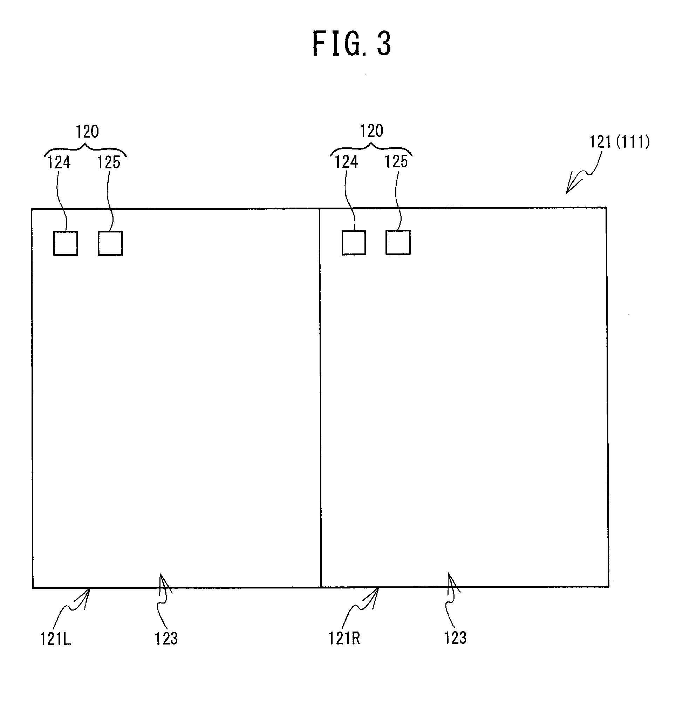

A paper sheet 121, which is an example of the paper sheet 111 of the paper medium 100, will be explained with reference to FIG. 3. The left side, the right side, the upper side, and the lower side of FIG. 3 are respectively defined as the left side, the right side, the upper side, and the lower side of the paper sheet 111. FIG. 3 shows the paper sheet 121 that corresponds to two pages that are arranged in the left-right direction when the paper medium 100 is in a two-page spread state. In this state, a left page 121 L and a right page 121R are arranged side by side in the left-right direction. The left page 121L is a rear surface of the paper sheet 121 that is arranged on the left side. The right page 121R is a front surface of the paper sheet 121 that is arranged on the right side.

Each of the left page 121L and the right page 121R of the paper sheet 121 has a writing area 123 and check boxes 120. The check boxes 120 are a category check box 124 and a save check box 125. The category check box 124 is printed on the top left of the paper sheet 121 (each of the left page 121L and the right page 121R). The category check box 124 is square shaped. The save check box 125 is arranged in the vicinity of and to the right of the category check box 124. The save check box 125 is square shaped and is substantially the same size as the category check box 124. The writing area 123 is substantially rectangular shaped and extends along the edge portions of the paper sheet 121 in the up-down direction and the left-right direction. The writing area 123 is an area, of the paper sheet 121, that excludes an area on which the category check box 124 and the save check box 125 are printed.

The writing area 123 is an area for the user to use the electronic pen 3 to write a line drawing that indicates information. The category check box 124 is an area for the user to write a line drawing that indicates a check mark, in order to specify a category of a save location of an image file. The category of the save location is, for example, a TODO folder. The save check box 125 is an area for the user to write a line drawing that indicates a check mark, in order to confirm the line drawing written in the writing area 123. For example, after writing a line drawing in the writing area 123, the user may write the check marks in the category check box 124 and the save check box 125. In this case, based on the line data of the line drawing written in the writing area 123, the CPU 21 of the reading device 2 generates an image file. The image file indicates the line drawing written in the writing area 123. The CPU 21 may transmit the image file to the smart phone 19. The CPU 41 of the smart phone 19 may store the image file received from the reading device 2 in a TODO storage area of the flash ROM 43. This will be explained in detail below.

An overview of processing of the CPU 21 when the image file is generated based on the line drawing written on the paper sheet 121 will be explained with reference to FIG. 2 and FIG. 3. While the writing pressure is being applied to the electronic pen 3, the CPU 21 of the reading device 2 repeatedly detects, at a uniform cycle, the coordinate data that indicates the position of the electronic pen 3, via the ASIC 28A and the ASIC 29A. In the present embodiment, the CPU 21 may determine which of the writing area 123, the category check box 124, and the save check box 125 is an area in which the line drawing is being written, based on the detected coordinate data and the layout data. When the CPU 21 determines that the line drawing is being written in the writing area 123, the CPU 21 acquires the line data for each line drawing and temporarily stores the line data in the RAM 22. The line data indicates a plurality of positions that configure the single line drawing written on the paper sheet 121 using the electronic pen 3. Specifically, the line data includes the coordinate data indicating the plurality of positions that configure the single line drawing. The CPU 21 acquires the coordinate data in association with time data indicating the time at which the coordinate data is detected. The plurality of positions that configure the single line drawing may indicate the same position.

Each time the user uses the electronic pen 3 and writes a line drawing one at a time in the writing area 123, the line data is stored in the RAM 22. Thus, the line data indicating the line drawings written in the writing area 123 is accumulated in the RAM 22 until the save check box 125 is ticked.

When the CPU 21 determines that the line drawing is written in the save check box 125 after the line drawing is written in the writing area 123, the CPU 21 generates stroke data that includes the line data of the at least one line drawing stored in the RAM 22. Based on the line data that is included in the generated stroke data, the CPU 21 identifies the line drawing indicated by the line data. The CPU 21 generates an image file of an image that includes the identified line drawing. The image file is a data file in which the line drawing is indicated by a digital image. The save check box 125 is used to confirm the line drawing written in the writing area 123 and to instruct the generation of the image file that includes the confirmed line drawing. When the image is generated, the CPU 21 stores the generated image file in the flash ROM 23. After that, the CPU 21 deletes the generated stroke data.

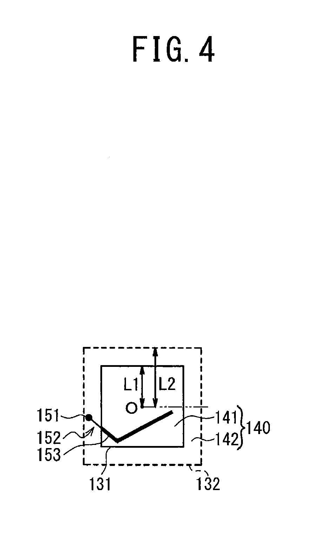

An overview of processing by the CPU 21 to determine whether the check box 120 is ticked will be explained with reference to FIG. 3 to FIG. 7. The detection area includes a first area 141 (refer to FIG. 4 to FIG. 7), a second area 142 (refer to FIG. 4 to FIG. 7), a third area, and a start point determination area 140 (refer to FIG. 4 to FIG. 7). The first area 141 is an area that is part of the detection area. The second area 142 is an area that is part of the detection area and is different to the first area 141. The third area is an area that is part of the detection area and is different to the first area 141. The third area may overlap with at least part of the second area 142. In the present embodiment, the third area is an area that includes the second area 142 and that is larger than the second area 142. The start point determination area 140 is an area that is part of the detection area. The start point determination area 140 includes the first area 141 and the second area 142. More specifically, the start point determination area 140 is an area formed by combining the first area 141 and the second area 142.

When the paper medium 100 is placed on the reading device 2 in the correct position, the left page 121L of the paper sheet 121 is placed on top of the detection area of the sensor board 7L and the right page 121R is placed on top of the detection area of the sensor board 7R. In this state, each of the check boxes 120 has a positional correspondence to the individual first area 141, and the writing area 123 has a positional correspondence to the third area. In other words, each of the check boxes 120 is arranged such that each of the check boxes 120 overlaps with the first area 141. The writing area 123 is arranged such that the writing area 123 overlaps with the third area.

As shown in FIG. 4, the first area 141 is an area inside a quadrilateral shape 131. The quadrilateral shape 131 is, for example, a regular square. The quadrilateral shape 131 is a 10 mm square, for example. In the present embodiment, the size of the check box 120 is substantially the same as the size of the quadrilateral shape 131. In other words, the check box 120 is a 10 mm square, for example. The second area 142 is an area that is provided outside the first area 141 and that is in contact with the first area 141. Specifically, the second area 142 is an area that surrounds the periphery of the first area 141. Of an area inside a quadrilateral shape 132, the second area 142 is an area that is outside the first area 141. The quadrilateral shape 132 is a quadrilateral shape that is larger than the quadrilateral shape 131 and surrounds the periphery of the quadrilateral shape 131. In the present embodiment, the quadrilateral shape 132 is a regular square.

A distance from a center O of the first area 141 to the outer edge of the first area 141 is designated as a distance L1. A distance from the center O of the first area 141 to the outer edge of the second area 142 is designated as a distance L2. It is preferable that the distance L2 be more than once the distance L1 and equal to or less than twice the distance L1. In the present embodiment, the distance L2 is 7 mm, for example. The distance L1 is 5 mm, for example. In this case, a distance (L2 - L2) from the outer edge of the first area 141 to the outer edge of the second area 142 is 2 mm. The center O is an intersection point of diagonal lines of the quadrilateral shape 131, for example. The center O may be established using another method, and may be a center of gravity of the quadrilateral shape 131, for example.

In the present embodiment, in a case where the start point of the single line drawing in the detection area is inside the start point determination area 140 and at least one of a first condition and a second condition is satisfied, the CPU 21 determines that the check box 120 is ticked. In this manner, the CPU 21 can determine that the instruction corresponding to the check box 120 is input. The first condition is that, of the single line drawing, a line corresponding to positions detected inside the first area 141 is equal to or longer than a specified length. In the present embodiment, the specified length is a length that is equal to or longer than the distance (L2 - L1) from the outer edge of the first area 141 to the outer edge of the second area 142. The specified length is 2 mm, for example. The second condition is that, of the single line drawing, one or more positions inside the first area 141 are consecutively detected for equal to or longer than a specified time period. The specified time period is 2 seconds, for example.

As shown in FIG. 4, for example, the user may write a line drawing 152 having a start position 151, as the check mark, in the check box 120 on the paper sheet 121. Specifically, on the paper sheet 121, the user may start writing the check mark in an area that is outside the check box 120 and that corresponds to the second area 142. Then, the user may write a line 153 having the specified length or more inside the check box 120 corresponding to the first area 141. The line 153 is at least a part of the line drawing 152. In this case, the start position 151 of the line drawing 152 is inside the start point determination area 140. Of the line drawing 152, the line 153 corresponding to the positions detected inside the first area 141 is equal to or longer than the specified length (2 mm). In other words, the first condition is satisfied. Further, when the positions inside the first area 141 is consecutively detected for equal to or longer than the specified time period, the second condition is also satisfied. Thus, at least one of the first condition and the second condition is satisfied. Therefore, the CPU 21 determines that the check box 120 is ticked.

For explanatory convenience, the start position 151 is indicated by a black circle. Further, for explanatory convenience, of the line drawing 152, the line 153 corresponding to the positions detected inside the first area 141 is indicated as being thicker in comparison to the other sections of the line drawing 152. In actuality, it is sufficient that writing pressure be applied to the core body 31 to a degree at which the ASIC 28A and the ASIC 29A are able to detect the coordinate data indicating the position of the electronic pen 3. Thus, the line drawing may be any thickness at all. In addition, it is sufficient if the writing operation is performed, even if the line drawing is not written due to the electronic pen 3 running out of ink or the like.

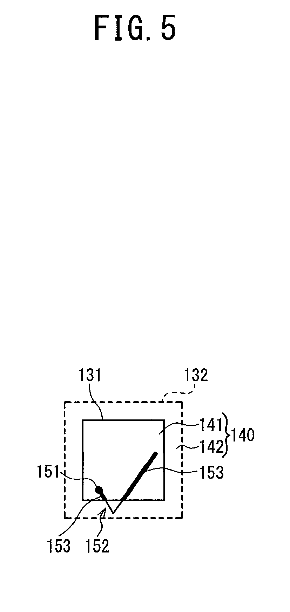

As shown in FIG. 5, for example, the user may start writing the line drawing 152, as the check mark, on the paper sheet 121 from inside the check box 120 corresponding to the first area 141. Then, after the line drawing 152 emerges from the check box 120, the line drawing 152 may be once more written inside the check box 120 for equal to or longer than the specified length (2 mm). In this case, the start position 151 of the line drawing 152 is inside the start point determination area 140. Further, there are two lines 153 corresponding to the positions detected inside the first area 141. One of the two lines 153 is equal to or longer than the specified length (2 mm). In other words, the first condition is satisfied. Thus, the CPU 21 determines that the check box 120 is ticked.

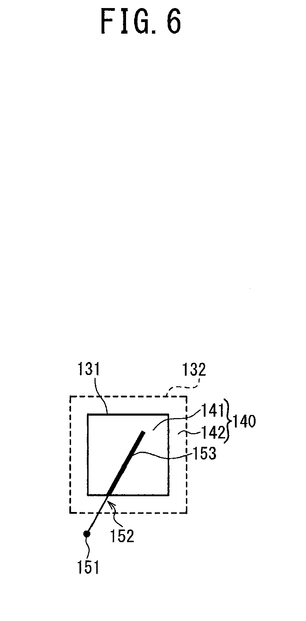

As shown in FIG. 6, for example, the user may start writing the line drawing 152, as the check mark, on the paper sheet 121 from outside the area corresponding to the second area 142. Then, the line drawing 152 may have the line 153 that is equal to or longer than the specified length inside the check box 120. In other words, of the line drawing 152, the line 153 corresponding to the positions detected inside the first area 141 is equal to or longer than the specified length (2 mm). In this case, the first condition is satisfied. However, the start position 151 of the line drawing 152 is not inside the start point determination area 140. Thus, the CPU 21 determines that the check box 120 is not ticked.

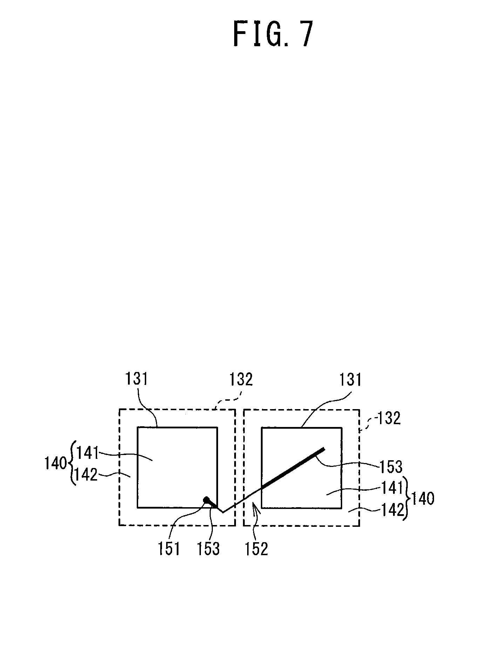

As shown in FIG. 7, for example, it is also possible that the user writes the single line drawing 152, as the check mark, in the plurality of check boxes 120 of the paper sheet 121. In this case, it is sufficient if the start position 151 of the single line drawing 152 is inside the start point determination area 140 corresponding to one of the plurality of check boxes 120. In addition, it is sufficient if at least one of the first condition and the second condition is satisfied with respect to a plurality of first areas respectively corresponding to the plurality of check boxes 120. For example, in FIG. 7, the left side quadrilateral shape 131 corresponds to the category check box 124 and the right side quadrilateral shape 131 corresponds to the save check box 125.

The user may start writing the line drawing 152 on the paper sheet 121 from inside the category check box 124. Then, the user may write the line drawing 152 as far as the inside of the save check box 125, which is arranged to the right of the category check box 124. After emerging from the category check box 124, the line drawing 152 may be written inside the save check box 125 for equal to or longer than the specified length (2 mm). In this case, the start position 151 of the line drawing 152 is inside the start point determination area 140 corresponding to the category check box 124.

The line 153 corresponding to the positions detected inside the first area 141 corresponding to the category check box 124 is shorter than the specified length (2 mm). However, it is assumed that the positions inside the first area 141 corresponding to the category check box 124 are consecutively detected for equal to or longer than the specified time period. Then, the line 153 corresponding to the positions detected inside the first area 141 corresponding to the save check box 125 is equal to or longer than the specified length (2 mm). In this case, the first condition is satisfied for each of the category check box 124 and the save check box 125. Thus, the CPU 21 determines that each of the category check box 124 and the save check box 125 is ticked. The user may write the line drawing 152, as the check mark, in each of the plurality of check boxes 120.

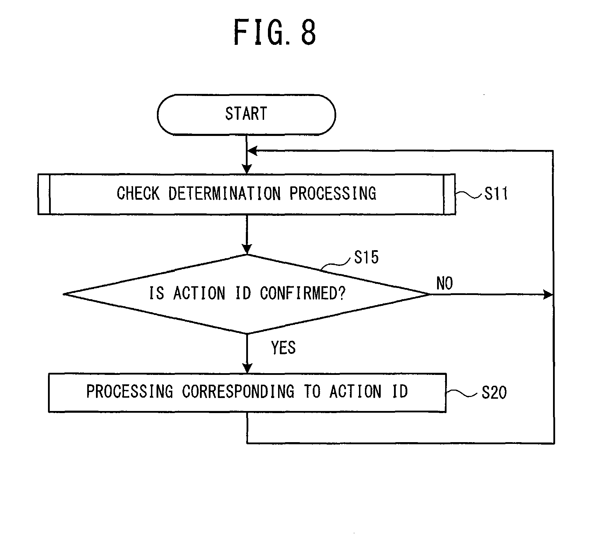

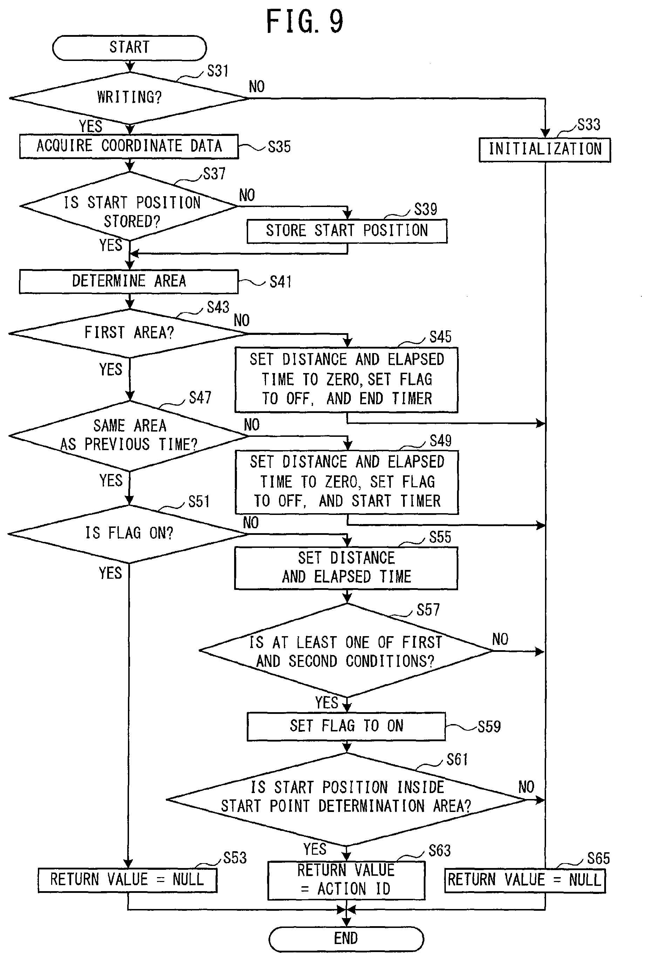

Main processing that is executed by the CPU 21 of the reading device 2 will be explained with reference to FIG. 8 and FIG. 9. The user may place the paper medium 100 in the correct position on the reading device 2. The user may open up the paper medium 100 to a double-page spread such that the left page 121L and the right page 121R of the paper sheet 121 (refer to FIG. 3) are respectively arranged on the left and the right. The user may switch on the power source of the reading device 2 in this state. When the power source of the reading device 2 is switched on, the CPU 21 starts the main processing by operating based on a program stored in the flash ROM 23. In parallel with the main processing, the CPU 21 also executes processing to store the line data of the line drawing written in the writing area 123 in the RAM 22.

At the start of the main processing, the CPU 21 reads out, from the flash ROM 23, layout data of the format of the paper sheet 121 of the paper medium 100 placed on the reading device 2, and stores the layout data in the RAM 22. The CPU 21 can refer to the layout data and identify the first area 141, the second area 142, the third area, and the start point determination area 140.

The CPU 21 executes check determination processing (step S11). The check determination processing will be explained with reference to FIG. 9. Based on the writing pressure applied to the electronic pen 3, the CPU 21 determines whether or not the line drawing 152 is being written on the paper sheet 121 (step S31). In a case where the CPU 21 determines that the line drawing 152 is not being written (no at step S31), the CPU 21 performs initialization (step S33). More specifically, the CPU 21 sets a flag to OFF and sets all variables (a distance and an elapsed time, to be explained below) to 0. At step S39 (to be explained below), in a case where coordinate data indicating the start position 151 is stored in the RAM 22, the CPU 21 deletes the coordinate data indicating the start position 151. In addition, in a case where a time period is being measured by a timer that is started at step S49 (to be explained below), the CPU 21 ends the measurement of the time period by the timer. After that, the CPU 21 advances the processing to step S65.

Meanwhile, in a case where the CPU 21 determines that the line drawing 152 is being written (yes at step S31), the CPU 21 acquires the coordinate data indicating the position of the electronic pen 3 via the ASIC 28A and the ASIC 29A and stores the coordinate data in the RAM 22 (step S35). Next, the CPU 21 determines whether the coordinate data indicating the start position 151 of the line drawing 152 is stored in the RAM 22 (step S37). Here, the start position 151 of the line drawing 152 is the start position 151 of the line drawing 152 that has been most recently written.

In a case where the CPU 21 determines that the coordinate data indicating the start position 151 is not stored (no at step S37), the CPU 21 stores, in the RAM 22, the coordinate data acquired at step S35 as the coordinate data indicating the start position 151 (step S39). In a case where the CPU 21 determines that the coordinate data indicating the start position 151 is stored (yes at step S37), or after the processing at step S39, the CPU 21 determines in which area of the detection area the position indicated by the coordinate data acquired at step S35 is located (step S41). Specifically, the CPU 21 determines whether the position indicated by the coordinate data acquired at step S35 is located in which one of the first areas 141 corresponding to the category check box 124 and the save check box 125, and the third area. The CPU 21 sets an area ID indicating the determined area, and stores the area ID in the RAM 22. The area ID of the first area 141 corresponding to the category check box 124 is 1. The area ID of the first area 141 corresponding to the save check box 125 is 10. The area ID of the third area is 0.

The CPU 21 determines whether the position indicated by the coordinate data acquired at step S35 is in the first area 141 (step S43). Specifically, the CPU 21 refers to the area ID set at step S41. In a case where the area ID is not 0, the CPU 21 determines that the position indicated by the coordinate data acquired at step S35 is in the first area 141 (yes at step S43). In a case where the area ID is 0, the CPU 21 determines that the position indicated by the coordinate data acquired at step S35 is not in the first area 141 (no at step S43).

When the CPU 21 determines that the position indicated by the coordinate data acquired at step S35 is not in the first area 141 (no at step S43), the CPU 21 sets the distance to 0 and sets the elapsed time to 0. The CPU 21 sets the flag to OFF. In a case where the time period is being measured by the timer that is started at step S49 (to be explained below), the CPU 21 ends the measurement of the time period by the timer (step S45). After that, the CPU 21 advances the processing to step S65. In a case where the CPU 21 determines that the position indicated by the coordinate data acquired at step S35 is in the first area 141 (yes at step S43), the CPU 21 determines whether the area determined by the processing at step S41 this time is the same as the area determined by the processing at S41 the previous time (step S47). More specifically, the CPU 21 determines whether the area ID set at step S41 this time is the same as the area ID set at step S41 the previous time.

In a case where the CPU 21 determines that the area determined by the processing at step S41 this time is not the same as the area determined by the processing at step S41 the previous time (no at step S47), the CPU 21 sets the distance to 0 and sets the elapsed time to 0. The CPU 21 sets the flag to OFF. In addition, the CPU 21 starts the time measurement by the timer (step S49). After that, the CPU 21 advances the processing to step S65. In a case where the CPU 21 determines that the area determined by the processing at step S41 this time is the same as the area determined by the processing at step S41 the previous time (yes at step S47), the CPU 21 determines whether the flag is ON (step S51).

In a case where the CPU 21 determines that the flag is ON (yes at step S51), the CPU 21 sets a return value to NULL (step S53). After that, the CPU 21 ends the check determination processing (step S11) and returns to the main processing. In a case where the flag is OFF, the CPU 21 determines that the flag is not ON (no at step S51) and sets the distance and the elapsed time (step S55). Specifically, the CPU 21 adds, to a currently set distance, a distance between the position indicated by the coordinate data acquired at step S35 the previous time and the position indicated by the coordinate data acquired at step S35 this time. Further, the CPU 21 refers to the timer that started the time measurement at step S49 and sets the value of the measured time period as the elapsed time.

Based on the distance and the elapsed time set at step S55, the CPU 21 determines whether at least one of the first condition and the second condition is satisfied (step S57). As described above, the first condition is that, of the single line drawing 152, the line 153 corresponding to the positions detected inside the first area 141 is equal to or longer than the specified length. Specifically, with respect to the first condition, the CPU 21 determines whether the distance set at step S55 is equal to or longer than a threshold value D. The threshold value D is 2 mm, for example. As described above, the second condition is that, of the single line drawing 152, one or more positions inside the first area 141 are consecutively detected for equal to or longer than the specified time period. Specifically, with respect to the second condition, the CPU 21 determines whether the elapsed time set at step S55 is equal to or greater than a threshold value T. The threshold value T is 2 seconds, for example.

In a case where the CPU 21 determines that neither the first condition nor the second condition is satisfied (no at step S57), the CPU 21 advances the processing to step S65. In a case where the CPU 21 determines that at least one of the first condition and the second is satisfied (yes at step S57), the CPU 21 sets the flag to ON (step S59).

The CPU 21 determines whether the start position 151 indicated by the coordinate data stored at step S39 is inside the start point determination area 140 (step S61). In a case where the CPU 21 determines that the start position 151 is not inside the start point determination area 140 (no at step S61), the CPU 21 advances the processing to step S65. At step S65, the CPU 21 sets the return value to NULL. After that, the CPU 21 ends the check determination processing (step S11) and returns to the main processing. In a case where the CPU 21 determines that the start position 151 is inside the start point determination area 140 (yes at step S61), the CPU 21 sets the return value to an action ID and stores the action ID in the RAM 22 (step S63). Specifically, the CPU 21 sets the action ID based on the area ID set at step S41. In a case where the area ID is 1, the CPU 21 sets category selection action as the action ID. In a case where the area ID is 10, the CPU 21 sets save action as the action ID. After that, the CPU 21 ends the check determination processing (step S11) and returns to the main processing.

As shown in FIG. 8, after the check determination processing (step S11), the CPU 21 refers to the return value and, based on whether the action ID is stored in the RAM 22, determines whether the action ID is confirmed (step S 15). In a case where the return value is NULL, the CPU 21 determines that the action ID is not confirmed (no at step S 15), and returns the processing to step S11. In a case where the return value is the action ID, the CPU 21 determines that the action ID is confirmed (yes at step S 15). After that, the CPU 21 executes processing corresponding to the action ID (step S20).

In a case where the action ID is the save action, the CPU 21 confirms the line drawing written in the writing area 123. Specifically, the CPU 21 generates the stroke data that includes the line data of the line drawing written in the writing area 123. As described above, the CPU 21 generates the image file based on the generated stroke data and stores the image file in the flash ROM 23. In a case where the action ID is the category selection action, the CPU 21 stores a specification of the category of the storage location of the image file in the flash ROM 23. As described above, the category of the storage location is the TODO folder, for example. After the CPU 21 executes the processing corresponding to the action ID (step S20), the CPU 21 returns the processing to step S11. In a case where the power source of the reading device 2 is switched off, the CPU 21 ends the main processing.

After ending the main processing, in a case where the CPU 21 receives a data request command from the smart phone 19 by wireless communication via the wireless communication portion 24, the CPU 21 wirelessly transmits the image file stored in the flash ROM 23 to the smart phone 19 via the wireless communication portion 24. In a case where the category specification is stored in the flash ROM 23, the CPU 21 associates the image file with the category specification and transmits the associated data to the smart phone 19.

The CPU 41 of the smart phone 19 may receive the image file transmitted from the reading device 2, and may store the image file in the flash ROM 43. In a case where the category specification is associated with the image file, the CPU 41 may store the image file in a storage area of the flash ROM 43 that corresponds to the specified category. For example, in a case where the TODO folder is specified as the storage location of the image file, the CPU 41 may store the image file in the TODO storage area of the flash ROM 43. Based on the image file stored in the flash ROM 43, the CPU 41 may display, on the display 192, the image that includes the line drawing written on the paper sheet 121 using the electronic pen 3. Communication when the image file is transmitted from the reading device 2 to the smart phone 19 is not limited to the wireless communication and may be performed by wired communication.

In the example shown in FIG. 5, from when the writing of the line drawing 152 is started until the line drawing 152 emerges from the check box 120, the line 153 inside the check box 120 is less than the specified length. Thus, the first condition is not satisfied. If the second condition is not satisfied (no at step S57), the CPU 21 of the reading device 2 repeats the processing at steps S65, S15, S31, S35, S37, S41, S43, S47, S51, S55, and S57. Then, when the line drawing 152 emerges from the check box 120, the CPU 21 determines that the position indicated by the coordinate data acquired at step S35 is not in the first area 141 (no at step S43). The CPU 21 repeats the processing at steps S45, S65, S15, S31, S35, S37, S41, and S43.

When the line drawing 152 is once more written inside the check box 120 (yes at step S43), and the line 153 inside the check box 120 becomes equal to or longer than the specified length (2 mm), the first condition is satisfied (yes at step S57). Further, the start position 151 of the line drawing 152 is inside the start point determination area 140 (yes at step S61). Thus, the CPU 21 sets the action ID as the return value (step S63). In other words, the CPU 21 determines that the check box 120 is ticked and the instruction is input.

In the example shown in FIG. 7, after the writing of the line drawing 152 is started, when the positions inside the first area 141 corresponding to the category check box 124 are detected for equal to or longer than the specified time period, the second condition is satisfied (yes at step S57). Further, the start position 151 of the line drawing 152 is inside the start point determination area 140 (yes at step S61). Thus, the CPU 21 sets the action ID as the return value (step S63). In other words, the CPU 21 determines that the category check box 124 is ticked. Thus, the CPU 21 determines that the instruction specifying the category of the storage location of the image file is input. After the line drawing 152 emerges from the category check box 124, the line drawing 152 is written as far as to the inside of the save check box 125. When the line drawing 152 enters into the save check box 125, the CPU 21 determines, at step S47, that the area determined in the processing at step S41 this time is not the same as the area determined in the processing at step S41 the previous time (no at step S47). Thus, the CPU 21 performs the processing at steps S49, S65, S15, S31, S35, S37, S41, and S43. Then, at step S47, the CPU 21 determines that the area determined in the processing at step S41 this time is the same as the area determined in the processing at step S41 the previous time (yes at step S47).

After the line drawing 152 emerges from the category check box 124 (no at step S43), the flag is set to OFF (step S45). Thus, at step S51, the CPU 21 determines that the flag is not ON (no at step S51). The CPU 21 repeats the processing at steps S55, S57, S65, S15, S31, S35, S37, S41, S43, S47, and S51. When the line 153 inside the check box 120 becomes equal to or longer than the specified length (2 mm), this satisfies the first condition (yes at step S57). Further, the start position 151 of the line drawing 152 is inside the start point determination area 140 (yes at step S61). Thus, the CPU 21 sets the action ID as the return value (step S63). In other words, the CPU 21 determines that the save check box 125 is ticked. Thus, the CPU 21 determines that the instruction is input to confirm the line drawing written in the writing area 123.

As explained above, the reading device 2 of the present embodiment determines whether the start position 151 of the line drawing 152 is inside the start point determination area 140, and also determines whether at least one of the above-described first condition and second condition is satisfied with respect to the first area 141. In this manner, the reading device 2 can accurately determine whether the check box 120 is ticked. As a result, the reading device 2 can accurately determine whether the instruction is input, based on the operation of writing the line drawing 152 that indicates the check mark. The user may start writing the line drawing 152 in the start point determination area 140, using the electronic pen 3. Then, the user may write the line of the specified length inside the first area 141 or continue to write for the specified time period. In this manner, the user can reliably input, into the reading device 2, the instruction corresponding to the check box 120

The reading device 2 determines whether the start position 151 of the line drawing 152 is inside the start point determination area 140, which is a larger area than the first area 141. With respect to the determination of the first condition and the second condition, the reading device 2 targets positions inside the first area 141, which is smaller than the start point determination area 140. For example, the user may start writing the line drawing 152 using the electronic pen 3, on the paper sheet 121, inside the area corresponding to the second area 142, which is provided outside the first area 141. In this case also, if the written line drawing 152 satisfies at least one of the first condition and the second condition, the reading device 2 can determine that the check box 120 is ticked. As a result, the user can reliably input, into the reading device 2, the instruction corresponding to the check box 120.

In a case where the reading device 2 detects the start position 151 of the line drawing 152 at a position, in the detection area, that is outside the second area 142 and at a specific distance from the center of the first area 141, the reading device 2 does not determine that the check box 120 is ticked. For example, the user may start writing the line drawing indicating information in the writing area 123. In this case, it is assumed that the user starts to write the line drawing 152 from a position that is at the specific distance from the center of the check box 120 corresponding to the first area 141 and unintentionally writes the line drawing 152 as far as the inside of the first area 141. In this case, the reading device 2 does not determine that the check box 120 is ticked. As a result, it is possible to inhibit the reading device 2 from mistakenly determining that the instruction is input.

In the present embodiment, when the paper medium 100 is placed in a state in which its position is determined on the reading device 2, each of the check boxes 120 of the paper sheet 121 has a positional correspondence to the individual first area 141 in the detection area of the reading device 2. Therefore, the user can input the instruction by writing the line drawing 152 in the check box 120 using the electronic pen 3.

In the present embodiment, the size of the first area 141 in the detection area of the reading device 2 is substantially the same as the size of the check box 120 of the paper sheet 121. Thus, the user can input the instruction into the reading device 2 by writing the line that is equal to or longer than the specified length in the check box 120 or by continuing to write in the check box 120 for the specified time period.

In the above-described embodiment, the reading device 2 is an example of an information input device of the present invention. The electric pen 3 is an example of a writing means of the present invention. The sensor boards 7L and 7R and the sensor control boards 28 and 29 are an example of a detection means of the present invention. The CPU 21 that performs the processing at step S35 of the check determination processing is an example of an acquisition means of the present invention. The start point determination area 140 is an example of a first area of the present invention. The CPU 21 that performs the processing at step S61 is an example of a first determination means of the present invention. The first area 141 is an example of a second area of the present invention. The CPU 21 that performs the processing at step S57 is an example of a second determination means of the present invention. The CPU 21 that performs the processing at step S63 of the check determination processing and the processing at step S15 of the main processing is an example of a third determination means of the present invention. The second area 142 is an example of a third area of the present invention. The distance L2 is an example of a first distance of the present invention. The distance L1 is an example of a second distance of the present invention.

Various modifications may be made to the above-described embodiment. The reading device 2 may detect the position of the electronic pen 3 using another method. For example, the reading device 2 may include a touch panel. The paper medium 100 may be placed on top of the touch panel. When the operation to write the line drawing on the paper sheet 111 of the paper medium 100 is performed using the electronic pen 3, the CPU 21 may detect coordinate data indicating a position at which the writing pressure is applied via the touch panel.

Another device, such as a smart phone, a tablet-type terminal or the like, may be used in place of the reading device 2. It is sufficient if the other device is provided with a touch panel, for example. The paper medium 100need not necessarily be placed on the other device. The user may write the line drawing by touching the touch panel with the user's finger or a touch pen, in place of the electronic pen 3. In this case also, it is sufficient if the other device, such as the smart phone, the tablet-type terminal or the like, detects the coordinate data indicating the position at which the touch panel is pressed.

The paper sheet 111 that can be used on the reading device 2 is not limited to the paper sheet 121 shown in FIG. 3, and may be the paper sheet 111 of another format. The format of the paper sheet 111 may be different for each type of the paper medium 100. The format of the paper sheet 111 may be different for each page. The flash ROM 23 may store the layout data respectively corresponding to the plurality of formats.

The shape, position, size, and the like of each of the writing area 123, the category check box 124, and the save check box 125 of the paper sheet 121 may be changed. For example, at least one of the category check box 124 and the save check box 125 may be a circular shape, an elliptical shape, a triangular shape, or another shape. The category check box 124 and the save check box 125 may be provided in a position in any one of the top right corner portion, the bottom left corner portion, and the bottom right corner portion of the paper sheet 121. The category check box 124 and the save check box 125 may be aligned in the up-down direction. The category check box 124 and the save check box 125 may be separated from each other.

In the present embodiment, the start point determination area 140 includes the first area 141 and the second area 142. However, the start point determination area 140 need not necessarily include at least a part of the first area 141. The start point determination area 140 may be the same area as the first area 141. In this case, at step S61 of the check determination processing shown in FIG. 9, the CPU 21 may determine whether the start position 151 indicated by the coordinate data stored at step S39 is inside the first area 141. The detection area need not necessarily include the second area 142.

The shape, position, size, and the like of the first area 141, the second area 142, and the start point determination area 140 of the detection area may be changed in accordance with the check box 120. For example, when the check box 120 is a circular shape, the first area 141 may be a circular shape having substantially the same size as the check box 120. The second area 142 may be a circular shape that is larger than the first area 141 and that surrounds the periphery of the first area 141.

The category of the storage location of the image file may be a folder other than the TODO folder. For example, the category of the storage location may be a Schedule folder, a Memo folder or the like. In the present embodiment, the two check boxes 120 are provided on the paper sheet 121 (each of the left page 121L and the right page 121R). However, the number of the check boxes 120 provided on the paper sheet 121 may be one or may be three or more. The category check box 124 may be provided on the paper sheet 121 in order to input an instruction other than that to specify the category of the storage location of the image file.

## Claims

1. An information input device (2) comprising:
a detection means (7L, 7R, 28, 29) for detecting one or more detection positions, the one or more detection positions being one or more positions of a writing means (3) that is one of in contact with and close to a detection area;
an acquisition means (21) for acquiring, based on the one or more detection positions detected by the detection means, line data that corresponds to a single line drawing written using the writing means and that includes at least one detection position of the one or more detection positions;
a first determination means (21) for determining whether a start position (151) is in a first area (140), the start position being a position first detected by the detection means among the at least one detection position included in the line data acquired by the acquisition means, and the first area being part of the detection area;
a second determination means (21) for determining whether at least one of a first condition and a second condition is satisfied, the first condition being that, of the at least one detection position included in the line data acquired by the acquisition means, a line indicated by one or more detection positions in a second area is equal to or longer than a specified length, the second condition being that the one or more detection positions in the second area are consecutively detected for equal to or longer than a specified time period, and the second area being an area that is part of the detection area; and
a third determination means (121) for determining that an instruction corresponding to the second area is input, in response to determining by the first determination means that the start position is in the first area and determining by the second determination means that at least one of the first condition and the second condition is satisfied.

2. The information input device according to claim 1, wherein
the first area includes the second area and a third area (142), the third area being an area that is provided outside the second area and that is in contact with the second area.

3. The information input device according to claim 2, wherein
the third area is an area that surrounds a periphery of the second area, and
a first distance (L2) is more than once a second distance (L1) and equal to or less than twice the second distance, the first distance being a distance from a center of the second area to an outer edge of the third area, and the second distance being a distance from the center of the second area to an outer edge of the second area.

4. The information input device according to any one of claims 1 to 3, wherein
the detection means includes the detection area, the detection area being configured such that a paper medium (100, 111, 121) can be placed thereon, the detection means being configured such that a check box provided on the paper medium placed on the detection area has a positional correspondence to the second area, and
the line data indicates the single line drawing, which is one of a point and a line, written on the paper medium using the writing means.

5. The information input device according to claim 4, wherein
a size of the second area is substantially the same as a size of the check box.

6. A method of controlling an information input device (2), the information input device including a detection means (7L, 7R, 28, 29) for detecting one or more detection positions, the one or more detection positions being one or more positions of a writing means (3) that is one of in contact with and close to a detection area, the method comprising the steps of:
acquiring, based on the one or more detection positions detected by the detection means, line data that corresponds to a single line drawing written using the writing means and that includes at least one detection position of the one or more detection positions;
determining whether a start position (151) is in a first area (140), the start position being a position first detected by the detection means among the at least one detection position included in the acquired line data, and the first area being part of the detection area;
determining whether at least one of a first condition and a second condition is satisfied, the first condition being that, of the at least one detection position included in the acquired line data, a line indicated by one or more detection positions in a second area is equal to or longer than a specified length, the second condition being that the one or more detection positions in the second area are consecutively detected for equal to or longer than a specified time period, and the second area being an area that is part of the detection area; and
determining that an instruction corresponding to the second area is input, in response to determining that the start position is in the first area and determining that at least one of the first condition and the second condition is satisfied.

7. The method according to claim 6, wherein
the first area includes the second area and a third area (142), the third area being an area that is provided outside the second area and that is in contact with the second area.

8. The method according to claim 7, wherein
the third area is an area that surrounds a periphery of the second area, and
a first distance (L2) is more than once a second distance (L1) and equal to or less than twice the second distance, the first distance being a distance from a center of the second area to an outer edge of the third area, and the second distance being a distance from the center of the second area to an outer edge of the second area.

9. A control program comprising instructions that, when executed by a processor of an information input device (2), cause the information input device to perform the method according to any one of claims 6 to 8, the information input device including a detection means (7L, 7R, 28, 29) for detecting one or more detection positions, and the one or more detection positions being one or more positions of a writing means (3) that is one of in contact with and close to a detection area.
